(19) Europäisches Patentamt
European Patent Office
Office européen des brevets

(11) **EP 2 834 283 B1**

(12) **EUROPEAN PATENT SPECIFICATION**

(45) Date of publication and mention
of the grant of the patent:
**21.04.2021 Bulletin 2021/16**

(21) Application number: **12872242.8**

(22) Date of filing: **22.03.2012**

(51) Int Cl.:
*C08G 18/10* (2006.01)      *C08G 18/83* (2006.01)
*C09D 175/04* (2006.01)      *C08G 18/75* (2006.01)
*C08G 18/34* (2006.01)       *C08K 3/26* (2006.01)
*C08K 3/22* (2006.01)        *C08G 18/08* (2006.01)
*C08G 18/42* (2006.01)       *C08K 3/00* (2018.01)
*C08F 290/14* (2006.01)      *C08K 5/09* (2006.01)
*C09D 133/12* (2006.01)

(86) International application number:
**PCT/CN2012/072797**

(87) International publication number:
**WO 2013/139019 (26.09.2013 Gazette 2013/39)**

(54) **POLYURETHANE/ACRYLIC HYBRID DISPERSIONS FOR ROOF COATINGS AND THEIR PREPARATION**

POLYURETHAN-/ACRYL-HYBRIDDISPERSIONEN FÜR DACHBESCHICHTUNGEN UND DEREN HERSTELLUNG

DISPERSIONS HYBRIDES POLYURÉTHANE/ACRYLIQUE POUR REVÊTEMENTS DE TOITS ET LEUR PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.02.2015 Bulletin 2015/07**

(73) Proprietors:
• **Dow Global Technologies LLC**
  **Midland, MI 48674 (US)**
• **Rohm and Haas Company**
  **Philadelphia, PA 19106 (US)**

(72) Inventors:
• **ZHANG, Jiguang**
  **Shanghai 201204 (CN)**
• **CHEN, Jitao**
  **Midland, MI 48674 (US)**
• **LU, Fujun**
  **Midland, MI 48674 (US)**
• **LU, Wei**
  **Hubei 442100 (CN)**
• **FENG, Shaoguang**
  **Shanghai 200126 (CN)**
• **ROKOWSKI, Joseph M**
  **Barto, Pennsylvania 19504 (US)**
• **SUN, Tong**
  **Shanghai 200125 (CN)**
• **RAVISANKER, Loganathan**
  **Shanghai 201316 (CN)**

(74) Representative: **Houghton, Mark Phillip**
**Patent Outsourcing Limited**
**1 King Street**
**Bakewell, Derbyshire DE45 1DZ (GB)**

(56) References cited:
**EP-A1- 2 314 636      WO-A1-2006/097318**
**WO-A1-2009/105396    CN-A- 101 157 749**
**CN-A- 101 481 451     CN-A- 101 945 906**
**JP-A- 2000 230 115    US-A- 5 521 246**
**US-A- 5 541 251       US-B1- 6 239 209**
**US-B1- 6 635 706**

Remarks:
The file contains technical information submitted after the application was filed and not included in this specification

EP 2 834 283 B1

## Description

Field

The present invention relates to a new process for making polyurethane/ acrylic hybrid dispersions useful in high PVC coatings, the polyurethane/ acrylic hybrid dispersions made thereof, and the coating composition comprising the polyurethane/ acrylic hybrid dispersions.

Background

Over recent decades, there has been a concerted effort to reduce atmospheric pollution caused by volatile solvents which are emitted during painting processes Due to environmental concerns, volatile organic compounds (VOCs) have come under strict regulation by the government. Therefore, one of the major goals of the coating industry is to minimize the use of organic solvents by formulating waterborne coating compositions which provide a smooth, high gloss appearance, as well as good physical properties including resistance to acid rain. While the solvent-type coatings provide many benefits, such as that they are fast-drying, have a high hardness, a high abrasion-resistance, a high water-resistance, a high chemical-resistance and a low price, the waterborne coatings have environment-friendly benefits in that they are not flammable or explosive. The waterborne coatings use water as the system solvent and contain no poisonous chemicals. They require no or low amounts of volatile organic compounds.

The unique advantage of polyurethane dispersions (PUDs) in relation to surface coatings is their ability to form coherent film and to control the microphase morphology by controlling the relative amounts of soft and hard segments in polymer chain. These features allow PUDs to be employed in a wide variety of surface coating applications where mechanical properties are particularly crucial. High abrasion resistance, superior toughness, elastomeric properties, and high extensibility at low temperature are typical benefits. However, relatively high raw material cost in comparison with a typical acrylic emulsion has restricted its use in many industrial applications. To overcomethis, polyurethane dispersions have been combined with other relatively inexpensive polymers to obtain a cost/ performance balance because the properties of polyurethane (PU) and the polyacrylate (PA) complement each other. The composite materials of PU and PA are more outstanding in terms of adhesion, film-formability, non-stickiness, weather-resistance, elongation and strength of the film with excellent cost-performance balance. Accordingly, since the development of PU, the modification of PU by PA has been an active research topic in the art.

Two methods can be used to modify PU with PA: physical methods and chemical methods. In the physical method, aqueous PA and PU dispersions (emulsions) are independently prepared first, and then both dispersions are mixed together under mechanical mixing. It is a very convenient method that makes it easy to control the composition of the final product. However, in such blends the superior performance properties may be compromised because of the incompatibility of the two materials, PU and PA. Such blended dispersions may suffer from instability.

For these reasons, chemical modification technology currently plays a more important role. The chemical method is achieved by post-polymerization of acrylates. In the chemical method, the PU dispersion can be prepared first, and then acrylates and other vinyl monomers can be polymerized in the PU dispersion. In most cases, core-shell emulsion polymerization is adopted. PU particles are used as seed particles and the acrylates are polymerized within the PU particles due to high hydrophobicity of the acrylates. These hybrid dispersions are expected to provide the advantages of PA, such as excellent weather resistance, affinity to pigments as well as lower cost, and the advantages of PU, such as better mechanical stability, excellent adhesion, solvent and chemical resistance, and toughness.However, when polyurethane/ acrylic hybrid dispersions made according to the prior art are formulated into paints with a pigment volume concentration (PVC) exceeding 40%, the elongation of coatings made therewith drops dramatically.

The present inventors have sought to solve the problem of providing polyurethane/ acrylic hybrid dispersions that when formulated into coatings provide improved binder affinity to pigments so that the PVC content in the formulated coating composition can be high while the performance of coatings made therefrom will not be adversely affected.

Summary

The present invention provides a process for making polyurethane/ acrylic hybrid dispersions comprising the following continuous steps: i) adding at least one polyol into a reactor; ii) adding Dimethylolpropionic Acid (DMPA)simultaneously with/ after step i), as a water dispersibility enhancing agent, at a temperature of from 115°C to 140°C to obtain a homogeneous solution; iii) adding at least one polyisocyanate at a temperature of from 75°C to 95°C, until the NCO content reaches a constant value, to prepare the polyurethane prepolymer; iv) adding at least one acrylate monomer(s), at least one styrenic monomer(s), or mixtures thereof, as diluent to the polyurethane prepolymer, at a temperature of from 40°C to 65°C; v) adding a neutralizing agent; vi) dispersing and extending the polyurethane prepolymer in water in the presence of the acrylate monomer, and/ or the styrenic monomer of step iv); and vii) feeding the emulsified mixture of at least one ethylenically unsaturated nonionic monomer(s), and based on the total weight of the ethylenically unsaturated nonionic monomer(s) including the acrylate monomer, and/ or the styrenic monomer of step iv), from 1 wt.% to 3 wt.% acid monomer(s), and co-polymerizing them together, at a pH value from 7.2 to 8.6 in the presence of a buffer reagent, to get the polyurethane/ acrylate hybrid dispersion.

The present invention further provides a process for making polyurethane/ acrylic hybrid dispersions further comprising cold-blending the polyurethane/ acrylic hybrid dispersions with polyacrylate dispersion under agitation. The process further comprises modifying the polyurethane/ acrylic hybrid dispersion and the polyacrylate dispersion by copolymerization with diacetone acrylamide or acetoacetoxyethyl methacrylate; and adding adipic acid dihydrazide, as a crosslinker.

The present invention further provides a high pigment volume concentrate (PVC) coating composition comprising a polyurethane/ acrylic hybrid dispersion comprising a polyurethane prepolymer, and an acrylic polymer comprising in polymerized form, ethylenically unsaturated nonionic monomer(s), and from 1 wt.% to 3 wt.%, based on the total weight of ethylenically unsaturated nonionic monomer(s), of an acid monomer(s) and one or more pigments and/ or fillers having a PVC of 25 to 55, or, 30 to 55, or, more preferably, 35 to 50, or, even more preferably, 38 or more.

Detailed Description

In the present invention, the term "polyurethane" or "PU" describes polymers including oligomers (e.g., prepolymers) which contain multiple urethane groups, i.e., -O-C(=O)-NH-, regardless of how they are made. As is well known, polyurethanes can contain additional groups such as urea, allophanate, biuret, carbodiimide, oxazolidinyl, isocyanurate, uretdione, ether, ester, carbonate, etc., in addition to urethane groups. Typically, the prepolymers will be above 1,000 or 2,000 Daltons in number average molecular weight and if the chain is extended during processing, can reach number average molecular weights in the millions of Daltons.

The term "polyacrylate" or "PA" as used herein means those polymers or resins resulting from the polymerization of one or more acrylates such as, for example, methyl acrylate, ethyl acrylate, butyl acrylate, 2-ethylhexyl acrylate, etc. as well as the methacrylates such as, for instance, methyl methacrylate, ethyl methacrylate, butyl methacrylate, hexyl methacrylate, etc. Copolymers of the above acrylate and methacrylate monomers are also included within the term "polyacrylate" as it appears herein. The polymerization of the monomeric acrylates and methacrylates to provide the PA dispersions useful in the practice of the invention may be accomplished by any of the well known polymerization techniques.

As used herein, the term "wt.%" refers to weight percent.

The polyurethane/ acrylic hybrid dispersion (PUA) of the present invention is prepared by a) PU prepolymer preparation; b) dispersing and extending PU prepolymer in water; and c) adding and polymerizing at least one ethylenically unsaturated nonionic monomer(s) and one or more acid monomers. The PU prepolymer preparation of the present invention may be made under decreasing temperature by adding one or more polyol(s) into a reaction vessel under $N_2$ purging and heating to a high temperature, preferably from 115°C to 140°C, more preferably from 120°C to 130°C, simultaneously or thereafter adding Dimethylolpropionic Acid (DM PA), as a water-dispersibility enhancing agent so that a homogeneous solution is obtained, lowering the composition temperature to 75°C - 95°C, more preferably from 80°C to 85°C, adding polyisocyanate(s), and reacting until the NCO content reaches a constant value, then adjusting the temperature to from 40°C to 65°C, more preferably from 55°C to 60°C, and adding at least one acrylate monomer(s), at least one styrenic monomer(s), or the mixture thereof as a reactive diluent. The weight ratio of acrylate and/ or styrenic monomers in the prepolymer may range from 10 wt.% to 50 wt.%, preferably from 10 wt.% to 30 wt.%. Finally, adding a neutralizing agent, such as a triethyl amine (TEA). The molar ratio of TEA to DM PA ranges from 0.9:1 to 1.1:1, preferably from 0.9:1 to 1:1.

In b), after a short (several minutes, such as, from 5 to 15 minutes, etc.) mixing time, pouring gradually the prepolymer into DI water under agitation to form a dispersion. Several minutes later, adding dropwise to above dispersion, a chain extender with a molar ratio to NCO as 0.9:1 to 1.1:1, preferably from 0.9:1 to 1:1.

In polymerizing the ethylenically unsaturated nonionic monomer(s) in c), the total amount of ethylenically unsaturated nonionic monomer(s), including the acrylate and/ or styrenic monomers, is from 10 wt.% to 80 wt.%, preferably from 30 wt.% to 50 wt.% based on the total weight of the PUA polymer.

Dispersing b) may also be conducted by pouring the PU prepolymer into a PA dispersion under agitation followed by chain extension.

In c), adding from 1 wt.% to 3 wt.%, preferably, from 1.5% to 2.0% based on the total weight of the ethylenically unsaturated nonionic monomer(s), of at least one acid monomer(s) as polymerization unit, and co-polymerizing with the ethylenically unsaturated nonionic monomer(s), the acrylate monomer, and/ or the styrenic monomer via radical polymerization, at a pH value from 6.8 to 8.6, preferably from 6.9-8.0, more preferably from 7.2-7.8, in the presence of a buffer reagent, a initiator, and at elevated temperature to get the polyurethane/ acrylate hybrid dispersion.

Suitable acid monomers for use in the present invention are selected from the group consisting of (methyl)

acrylic acid, phosphoethyl methacrylate, itaconic acid, crotonic acid, 2-acrylamido-2-methyl propane sulfonic acid, 2-carboxyethyl acrylate, maleic acid and its anhydride fumaric acid and its anhydridemaleic anhydride, citraconic acid and its anhydride, and the mixture thereof. Preferably, it is (methyl) acrylic acid, phosphoethyl methacrylate, or the mixture thereof. Suitable buffer reagents for use in the present invention are selected from the group consisting of $NaHCO_3$, sodium bitartrate, $Na_2HPO_4$/ $NaH_2PO_4$, $KHCO_3$, NaAC or the mixture thereof. Preferably, it is $NaHCO_3$.

Optionally, the PUA dispersion prepared according to the above process can be mixed with PA dispersion under agitation to make a PUA dispersion with high PA content.

Optionally, the PUA dispersion and PA dispersion may be separately modified by copolymerization with diacetone-based monomer, preferably, with DAAm or AAEM and other acrylate monomer(s). The amount of DAAm or AAEM ranges from 0 to 3 wt%, based on the total weight of monomers used to make the acrylic/ styrenic portion of the PUA, preferably from 1 to 3wt.%.

Adipic acid dihydrazide (ADH), as crosslinker, may be added into to the blend of PUA and PA dispersions. The content of polyacrylate, including those in both PA and PUA, may range from 10 wt. % to 80 wt. % in the total weight based on the total solids of PA and PUA.

Polyols, including polyether diols, polyester diols or multi-functional polyols, are used to prepare the PU pre-polymer. "Polyols" means any product having two or more hydroxyl groups per molecule. Non-limiting examples of the polyols useful herein include polyether polyols, polyester polyols such as alkyds, polycarbonate polyols, polyhydroxy polyester amides, hydroxyl-containing polycaprolactones, hydroxyl-containing acrylic polymers, hydroxyl-containing epoxides, polyhydroxy polycarbonates, polyhydroxy polyacetals, polyhydroxy polythioethers, polysiloxane polyols, ethoxylated polysiloxane polyols, polybutadiene polyols and hydrogenated polybutadiene polyols, polyisobutylene polyols, polyacrylate polyols, polyols derived from halogenated polyesters and polyethers, and the like, and mixtures thereof. The polyether polyols, polyester polyols, and polycarbonate polyols are preferred.

The polyether polyols that can be used as the active hydrogen-containing compound according to the present invention contain the --C--O--C-- group. They can be obtained in a known manner by the reaction of starting compounds that contain reactive hydrogen atoms such as water or diols, and alkylene oxides such as ethylene oxide, propylene oxide, butylene oxide, styrene oxide, tetrahydrofuran, epichlorohydrin and mixtures thereof. Preferred polyethers include poly(propylene glycol) with molecular weight of 400 to 3000, polytetrahydrofuran and copolymers of poly(ethylene glycol) and poly(propylene glycol). The diols used in the preparation of the polyether polyols include alkylene glycols, preferably ethylene glycol, diethylene glycol and butylene glycol.

The polyester polyols are typically esterification products prepared by the reaction of organic polycarboxylic acids or their anhydrides with a stoichiometric excess of a diol or diols. Non-limiting examples of suitable polyols for use in the reaction include poly(glycol adipate), poly(ethylene terephthalate) polyols, polycaprolactone polyols, alkyd polyols, orthophthalic polyols, sulfonated and phosphonated polyols, and mixtures thereof. The diols used in making the polyester polyols are as set forth for preparing the polyether polyols. Suitable carboxylic acids used in making the polyester polyols include, but are not limited to, dicarboxylic acids, tricarboxylic acids and anhydrides, e.g., maleic acid, maleic anhydride, succinic acid, glutaric acid, glutaric anhydride, adipic acid, suberic acid, pimelic acid, azelaic acid, sebacic acid, chlorendic acid, 1,2,4-butane-tricarboxylic acid, phthalic acid, the isomers of phthalic acid, phthalic anhydride, fumaric acid, dimeric fatty acids such as oleic acid, and the like, and mixtures thereof. Preferred polycarboxylic acids used in making the polyester polyols include aliphatic and/ or aromatic dibasic acids.

Particularly interesting polyols are the polyester diols containing -C(=O)-O-group. Non-limiting examples include poly(butanediol adipate), caprolactones, acid-containing polyols, polyesters made from hexane diol, adipic acid and isophthalic acid such as hexane adipate isophthalate polyester, hexane diol neopentyl glycol adipic acid polyester diols, as well as propylene glycol maleic anhydride adipic acid polyester diols, and hexane diol neopentyl glycol fumaric acid polyester diols.

Polyisocyanates have two or more isocyanate groups on average, preferably two to four isocyanate groups per molecule. Polyisocyanates typically comprise about 5 to 20 carbon atoms and include aliphatic, cycloaliphatic, aryl-aliphatic, and aromatic polyisocyanates, as well as products of their oligomerization, used alone or in mixtures of two or more. Diisocyanates are preferred. Toluene diisocyanate, hexamethylene isocyanate and/ or isophorone isocyanate may preferably be used in the embodiment of the present invention.

Non-limiting examples of suitable aliphatic polyisocyanates include alpha, omega-alkylene diisocyanates having from 5 to 20 carbon atoms, such as hexamethylene-1,6-diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, and the like. Preferred aliphatic polyisocyanates include hexamethylene-1,6-diisocyanate, 2,2,4-trimethyl-hexamethylene-diisocyanate, and 2,4,4-trimethyl-hexamethylene diisocyanate.

Non-limiting examples of suitable cycloaliphatic polyisocyanates include dicyclohexylmethane diisocyanate (commercially available as Desmodur™ from Bayer Corporation), isophorone diisocyanate, 1,4-cyclohexane diisocyanate, 1,3-bis-(isocyanatomethyl)cyclohexane, and the like. Preferred cycloaliphatic polyisocyanates include dicyclohexylmethane diisocyanate and isophorone diisocyanate.

Non-limiting examples of suitable araliphatic polyisocyanates include m-tetramethyl xylylene diisocyanate, p-tetramethyl xylylene diisocyanate, 1,4-xylylene diisocyanate, 1,3-xylylene diisocyanate, and the like. A preferred araliphatic polyisocyanateistetramethyl xylylene diisocyanate.

Non-limiting examples of suitable aromatic polyisocyanates include 4,4'-diphenylmethylene diisocyanate, toluene diisocyanate, their isomers, naphthalene diisocyanate, their oligomeric forms and the like. A preferred aromatic polyisocyanate is toluene diisocyanate.

The PU prepolymer may be formed without using a catalyst if desired, but using a catalyst may be preferred in some embodiments of the present invention. Non-limiting examples of suitable catalysts include stannous octoate, dibutyl tin dilaurate, and tertiary amine compounds such as triethylamine and bis-(dimethylaminoethyl)ether, morpholine compounds, bismuth carboxylate, zinc bismuth carboxylate and diazabicyclo[2.2.2]octane. Organic tin catalysts are preferred.

In the present invention, organic solvents are preferably not used, so the solvent-removing stage is omitted.

Chain extenders used in the preparation of the PU dispersion are employed in the dispersion step b). Non-limiting examples of chain extenders useful in this regard include any of inorganic or organic polyamines having an average of about 2 or more primary and/ or secondary amine groups, amine functional polyols, ureas, or combinations thereof, and their mixtures. Suitable organic amines for use as a chain extender include, but are not limited to, diethylene triamine (DETA), ethylene diamine (EDA), meta-xylylenediamine (MXDA), aminoethyl ethanolamine (AEEA), 2-methyl pentane diamine, and the like, and mixtures thereof. Also suitable for the present invention are propylene diamine, butylene diamine, hexamethylene diamine, cyclohexylene diamine, phenylene diamine, tolylene diamine, 3,3-dichlorobenzidene, 4,4' -methylene-bis-(2-chloroaniline), 3,3-dichloro-4,4-diamino diphenylmethane, sulfonated primary and/ or secondary amines, and the like, and mixtures thereof. Suitable inorganic amines include hydrazine, substituted hydrazines, and hydrazine reaction products, and the like, and mixtures thereof. Suitable ureas include urea and its derivatives, and the like, and mixtures thereof. Ethylene diamine is preferably used. The amount of chain extender, which can be added before or after dispersion, typically ranges from about 0.5 to about 1.1 equivalents based on available equivalents of isocyanate.

The PA dispersion of the present invention may comprise a homopolymer of acrylates, a copolymer of acrylates, a copolymer of acrylates with other vinyl monomers, and/ or mixtures thereof. With the consideration of properties and prices of the products, all traditional co-monomers may be used to prepare the polymers and copolymers.

Non-limiting examples of suitable acrylate monomer(s) include esters of (meth)acrylic acid containing 1 to 18 carbon atoms in the alcohol radical, such as methyl methacrylate, butyl methacrylate, ethyl acrylate, butyl acrylate, cyclohexyl acrylate, 2-ethylhexyl acrylate and stearyl acrylate; di(meth)acrylic acid esters of diols, e.g. ethylene glycol, 1,4-butanediol or 1,6-hexanediol. The monomers including methyl (meth)acrylate, ethyl acrylate, butyl acrylate, hexyl acrylate, 2-ethylhexyl acrylate, hydroxyethyl (meth)acrylate, hydroxypropyl (meth)acrylate and glycidyl methacrylate, are preferable.

The ethylenically unsaturated nonionic monomers include, for example, (meth)acrylic ester monomers, where (meth)acrylic ester designates methacrylic ester or acrylic ester, including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate; (meth)acrylonitrile; (meth)acrylamide; amino-functional and ureido-functional monomers; monomers bearing acetoacetate-functional groups; styrene and substituted styrenes; butadiene; ethylene, propylene, $\alpha$-olefins such as 1-decene; vinyl acetate, vinyl butyrate, vinyl versatate and other vinyl esters; and vinyl monomers such as vinyl chloride, vinylidene chloride.

Herein, "nonionic monomer" meansthat the copolymerized monomer residue does not bear an ionic charge between pH =1-14.

For the polymerization of monomers, initiators that may be used include, but are not limited to, peroxides such as potassium peroxy-disulphate, ammonium peroxydisulphate, organic peroxides, organic hydroperoxides and hydrogen peroxide. Redox systems are preferably used, such as water-soluble, radical-producing non-ionogenic peroxides, e.g. t-butyl hydroperoxide, as the oxidation component, and reduction components such as formaldehyde sulphoxylate or ascorbic acid. Ammonium peroxydisulphate, also called ammonium persulfate, is preferably used.

The polymerization can be carried out using any technical method for preparing an aqueous emulsion polymerization, employing non-ionic and/ or anionic surfactants. Thedesignsfor the formulations and the reaction technology can be utilized to obtain specific particle morphologies and reactive functionalities so that the PA can match the PU prepolymer/ dispersion and/ or PUA dispersion to give good film properties. Preferably, the polymerization is carried out with the previously mentioned monomers and is initiated with radical initiators. In one embodiment of the present invention, the mixture of monomers pre-emulsion and the initiator solution are respectively fed into a reactor over a defined period of time, such as 0.8 to 6 hours, preferably 3.5 hours. The initiator solution may comprise an initiator and water. The pre-emulsion comprises monomer mixture, surfactant/ emulsifier and water. The polymerization time span is dependent on the reaction conditions, such as temperature, initiator type and dosage, monomer dosage (solid content) and the reactivity of the monomers.

Emulsion polymerization is generally conducted at temperatures of about 55°C to about 90°C, preferably 60°C to 85°C, and more preferably 75°C to 80°C. After the completion of the polymerization reaction, the polymer emulsion is allowed to cool to ambient temperature.

The obtained aqueous polymer emulsion has an average particle diameter of 30 to 300 nanometers (nm), preferably 40 to 90 nm, more preferably 50 to 80 nm.

The PUA dispersion of the present invention can be used for preparing coating compositions comprising one or more pigments, and/ or fillers , especially for high pigment volume concentration (PVC) coating compositions having a PVC of 25 to 55, or, 30 to 55, or, more preferably, 35 to 50 or, even more preferably, of 38 or more suitably for high PVC roof coatings. PVC is a percentage calculated by the equation PVC = (total volume of pigments, and fillers in a coating/ total volume of coating solids in the coating, including polymer solids) X 100%.

During application, the total amount of the pigments and fillers are typically from 10% to 60%, preferably from 20% to 50%, more preferably from 25% to 46%, most preferably from 33% to 45% by dry weight based on the total weight of the coating composition.

Examples of pigments that can be used in the invention include, but are not limited to, titanium dioxide ($TiO_2$), zinc sulfide, lithopone, iron oxides, feldspar, and mixed metal oxides. Preferred pigments are titanium dioxide ($TiO_2$), and zinc oxide.

Examples of fillers which may be used in the high PVC roof coatings of the present invention are carbonates such as calcium carbonate in the form of dolomite, calcite, or chalk, silicates such as magnesium silicate in the form of talc, or aluminum silicates, such as loam and clays; powered quartz, quartz sand, finely divided silica, feldspar, barite, and calcium sulfate. Fibrous fillers are also suitable. Use is often made industrially of mixtures of various fillers, for example mixtures of fillers of different particle size, or mixtures of carbonaceous and silicaceous fillers. Preferably, the filler is calcium carbonate ($CaCO_3$).

Additional ingredients of the coating composition include, but are not limited to, stabilizers, dispersants, surfactants, paraffins, waxes, UV light stabilizers, rheology modifiers, mildewcides, biocides, fungicides, and other conventional additives.

Examples

Unless otherwise indicated, all pressures are atmospheric or ambient pressure and all temperatures are room temperature.

Raw materials used in the Examples includethose listed in the following Tables:

| Abbreviation | Chemical Nature |
| --- | --- |
| PCL 2K | Polycaprolactone PCL(Mn=2000), solid |
| DBTDL | Dibutyl tin Dilaurate |
| IPDI | Isophorone Diisocyanate |
| DMPA | Dimethylolpropionic Acid |
| MMA | Methyl Methacrylate |
| TEA | Triethylamine |
| PDA | Propylene Diamine |
| SFS | Formaldehyde Sodium Sulphoxylate |
| BA | Butyl Acrylate |
| ST | Styrene |
| KPS | Potassium Persulfate |
| AM | Acrylamide |
| MAA | MethacrylicAcid |
| t-BH P | tert-Butyl Hydroperoxide |
| PTMEG | Polytetramethylene Ether Glycol |
| PBA | Polyethylene Buthlene Glycol Adipate |
| PPG | Poly Propylene Glycol |

(continued)

| Abbreviation | Chemical Nature |
|---|---|
| PEM | Phosphoethyl methacrylate and phosphoethyl dimethacrylate, Including 45% monoester and 20% diester and some phosphoric acid and MMA |

Formulation materials:

| Materials | Function | Supplier |
|---|---|---|
| Tamol 850 | Polyacid Dispersant | Dow Chemical Company |
| KTPP | Dispersant, Potassium Tripolyphosphate | Dow Chemical Company |
| Nopco NXZ | Silicone based defoamer | Henkel |
| $TiO_2$ Ti-Pure R-902 | Pigment | Dupont |
| $CaCO_3$ CC-700 | Filler | Snopharm Chemical Reagent Company |
| ZnO | Pigment | Snopharm Chemical Reagent Company |
| Teaxanol | Coalescent2,2,4-Trimethyl-1,3-pentanediol monoisobutyrate | Eastman |
| Propylene glycol | Solvent | Snopharm Chemical Reagent Company |
| N atrosol 250H BR | Thickener, hydroxyethylcellulose is a nonionic, water-soluble hydroxyethylcellulose surface-treated with glyoxal | Ashland |
| Skane M-8 | M ildewcide, formaldehyde- free mildewcide having active ingredient is identified as2-n-octyl-4-isothiazolin-3-one | Dow Chemical Company |

Test Methods used in the Examples include:

1. Dirt Pickup Resistance: (according to GB/ T 9755-2011 by General Administration of Quality Supervision, Inspection and Quarantine of the People's Republic of China)

a) Drawing down coating films on asbesto cement panels (wet film thickness 120um+80um by wiring bar applicator);

b) Curing 7days in constant temperature room (CTR) (Temperature: 23 °C, humidity: 50%);

c) Checking the initial reflectance of coating films (described as $Y_1$);

d) Brushing formulated ash dispersion onto coating films thoroughly, and then dried 2 hrs in CTR;

e) Rinsing off dirt from coating films by tap water for 1 min;

f) Repeating above evaluation cycle for 5 times; and

g) Checking the final reflectance ($Y_2$) and calculating loss rate of Y value: loss % = ($Y_1$ -$Y_2$)/ $Y_1$.

2. Tensile strength and elongation rate: (according to JG/ T172-2005 by Ministry of Housing and Urban-Rural Development of PRC China)

a) Draw-downing on release paper (dry film thickness is 1mm);

b) Curing 14days in CTR (Temperature: 23 °C, humidity: 50%; after 7days, need to turn over);

c) Cutting paint films into a dumb bell shape; and

d) Using Gotech-Al 7000M Universal Testing Machine with a crosshead speed of 200 mm/ min to test elongation and tensile at room temperature.

3. Water swelling performance:

a) Measuring cured coating film weight as $m_1(g)$;
b) Immersing above coating films into water as described in GB/T 6682-2008(by General Administration of Quality Supervision, Inspection and Quarantine of the People's Republic of China) for 168hrs;
c) Removing excess water with a tissue paper, then determining the weight of the absorbed water on coating film is $m_2(g)$;
d) Calculating water swelling as %. Water swelling % = $(m_2-m_1)/ m_1$

$$W = \frac{(m_2 - m_1)}{m_1} \times 100\%$$

Comparative Example 1: Pure acrylic latex with a solid content, 54.5-55.5%; pH 9.0-9.6; Brookfield viscosity, max. 140 cPs, by Brookfield viscometer, 2#spindle, 60rpm; Density (wet), 1.04g/ cm$^3$;

Glass transition temperature (Tg), -40.0 °C; by Differential scanning calorimetry (DSC) as a heating rate of 10 °C/ min in the range of -30 °C ~100 °C under nitrogen atmosphere.

Comparative Example2: PUA hybrid dispersion.

A mixture of 200g PCL2K and 0.1g DBTDL were added into a 1L three-necked flask under stirring. Theflask was then heated to 115°C while purging the system with $N_2$ for 15 min. 80g IPDI was added into the flask slowly and the reaction was kept for 1 hour after cooling the system to 85 °C. 16.5 g DMPA was added afterwards for another 2 hour reaction period at the same temperature. Mixture of 40 g MMA and 12.3g TEA were added into the flask after cooling the temperature to 65°C under stirring for 10 minutes.

The above pre-polymer was poured slowly into 680 g DI water in another container under vigorous stirring for 10 minutes. 9.6 g PDA was added dropwise into above emulsion under stirring for additional 10 minutes. Above emulsion was filtered with 100-mesh filter cloth to get the PU pre-polymer dispersion.

The emulsion dispersion was transferred into another flask which was equipped with a condenser, a mechanical stirrer and inlet for $N_2$. Solution of KPSin DI water as initiator was poured into the flask. Monomer emulsion containing MMA and BA (mole ratio=2/ 3) was added into the flask under mild stirring under a nitrogen atmosphere. Temperature was increased to 75°C to initiate the polymerization reaction for a period of two hours. Afterwards the temperature was lowered to 58°C for residual monomer chasing process. 0.10g t-BHPwas added into above emulsion. After that a solution of 0.10g SFSin 3 mL DI water was fed into the emulsion over 5 minutes. The system was cooled to room temperature after reaction period of 50 minutes. PUA emulsion was obtained by filtering through 100 mesh (0.15 mm) filtering cloth.

Example 1:

An aqueous dispersion was prepared by: adding a mixture of 200g PCL2K and 0.1g DBTDL catalyst into a 1L three-necked flask under stirring. The flask was then heated to 120°C while purging the system with $N_2$ for 15 min. 80g IPDI was added into the flask slowly and the reaction was kept for 1 hour after cooling the system to 85°C. 16.5 g DM PA was added after wards for another 2h reaction period at the same temperature. Mixture of 40 g MMA and 12.3g TEA were added into the flask after cooling the temperature to 50°C under stirring for 10 minutes.

The above prepolymer was poured slowly into 680 g DI water in another container under vigorous stirring for 10 minutes. 9.6 g PDA was added dropwise into above emulsion under stirring for additional 10 minutes. Above emulsion was filtered with 100-mesh filter cloth to get the PU-prepolymer dispersion.

The emulsion dispersion was transferred into another flask which was equipped with a condenser, a mechanical stirrer and inlet for $N_2$. Solution of KPSin DI water as initiator was poured into the flask. 1.5% MAA, together with MMA and BA monomers, was fed into above dispersions. NaHCO$_3$ solution was added together with the monomer feeding to control the emulsion pH at around 7.2. Temperature was increased to 75°C to initiate the polymerization reaction for a period of two hours. Afterwards the temperature was lowered to 58 °C for residual monomer chasing process. 0.10g t-BHPwas added into above emulsion. After that a solution of 0.10g SFS in 3 mL DI water was fed into the emulsion over 5 minutes. The system was cooled to room temperature after reaction period of 50 minutes. PUA emulsion was obtained by filtering through 100 mesh (0.15 mm) filtering cloth.

Comparative Example 1, Comparative Example 2 as well as Example 1 were formulated into ERC paints at a PVC level (35%) and high PVC level (43%) separately with the following ingredients:

|  | Ingredients | 43% PVC | 35% PVC |
|---|---|---|---|
| Grind |  | g | g |
| A. | Water | 152.5 | 188.4 |
|  | Tamol 850 | 4.8 | 3.92 |
|  | KTPP | 1.4 | 1.14 |
|  | Nopco NXZ | 1.9 | 1.9 |
| B. | $CaCO_3$ CC700 | 422.2 | 343.84 |
|  | $TiO_2$Ti-pureR-902 | 70.4 | 57.33 |
|  | ZnO | 46.9 | 38.19 |
|  |  |  |  |
| Letdown |  |  |  |
| C. | Latex | 470.6 | 532.66 |
|  | Nopco NXZ | 1.9 | 1.9 |
|  | Texanol | 7 | 7.94 |
|  | Skane M-8 | 2.1 | 2.1 |
|  | Ammonia | 1 | 1 |
|  | Propylene Glycol | 24.4 | 24.4 |
|  | N astrosol 250 H BR | 4.2 | 4.2 |

As shown in Table 6, below, the acid monomer (MAA etc.) copolymerized into the acrylic backbone dramatically enhanced the mechanical performance especially elongation rate of coatings at high PVC levels (higher than 40% PVC). Also, the water swelling performance results of Example 1, compared with C.Ex.1 and C.Ex.2, were listed in Table 5 below. The less water swelling ration means better water resistance property after one week soak in water. Example 1 outperformed C.Ex.1 and C.Ex.2 at relative low PVC and high PVC levels.

Table 5 Water Swelling

|  | Water Swelling Ratio/ % |
|---|---|
| C.Ex.1 (35PVC) | 16.80 |
| C.Ex.2(35PVC) | 7.93 |
| Example 1(35PVC) | 6.05 |
| C.Ex.1 (43PVC) | 8.20 |
| C.Ex.2(43PVC) | 6.55 |
| Example 1(43PVC) | 4.64 |

The tensile strength and elongation rate results were summarized in Table 6. Comparative example 1 has higher elongation rate but lower tensile elongation at both PVC levels due to the intrinsic elastic property of soft acrylic segment in pure acrylic emulsions. As for PUA hybrid emulsions, there is always drop rate for the elongation rate for pigmented coating films especially at high PVC levels (See C.Ex.2). After acid monomer was copolymerized into PUA polymer backbone, the interface and dispersity of binder with pigments was improved because of better affinity the carboxyl group with inorganic pigments, leading to enhanced elasticity property. Example 1 has more balanced mechanical property and better elongation rate at high PVC level (43%).

Table 6 Tensile/ Elongation performance of pigmented coating films

|  | Tensile Strength/ MPa | Elongation Rate/ % |
| --- | --- | --- |
| C.Ex.1 (35PVC) | 1.0 | 397.6 |
| C.Ex.2(35PVC) | 3.1 | 230.6 |
| Example 1(35PVC) | 3.8 | 254.9 |
| C.Ex.1 (43PVC) | 2.3 | 193.42 |
| C.Ex.2 (43PVC) | 3.4 | 79.7 |
| Example 1(43PVC) | 2.8 | 163.5 |

As shown in table 7, below, the dirt pickup resistance equates with a lower loss of reflectance. Example 1 has much better dirt resistance than C.Ex.1 both at 35% and 43% PVC levels, even comparable with C.Ex.2 within national standard requirement (<20%).

Table 7 Dirt Pickup Resistance

|  | Loss of Reflectance/ % |
| --- | --- |
| C.Ex.1 (35PVC) | 32.5 |
| C.Ex.2(35PVC) | 11.4 |
| Example1(35PVC) | 14.1 |
| C.Ex.1 (43PVC) | 17.9 |
| C.Ex.2 (43PVC) | 12.8 |
| Example 1(43PVC) | 15.1 |

Example 2:

An aqueous dispersion was prepared as following process: mixture of 200g PCL2K and 0.1g DBTDL catalyst were added into a 1L three-necked flask under stirring. The flask was then heated to 115°C while purging the system with $N_2$ for 15 min. 80g IPDI was added into the flask slowly and the reaction was kept for 1 hour after cooling the system to 80 °C. 16.5 g DMPA was added afterwards for another 2h reaction period at the same temperature. Mixture of 40g MMA and 12.3g TEA were added into the flask after cooling the temperature to 55°C under stirring for 10 minutes.
The above prepolymer was poured slowly into 680 g DI water in another container under vigorous stirring for 10 minutes. 9.6 g PDA was added dropwise into above emulsion under stirring for additional 10 minutes. Above emulsion was filtered with 100-mesh filter cloth to get the PU-prepolymer dispersion.
The emulsion dispersion was transferred into another flask which was equipped with a condenser, a mechanical stirrer and inlet for $N_2$. Solution of KPSin DI water as initiator was poured into the flask. 1.5% AA, together with St and BA (mole ratio= 2/ 3) monomers, was fed into above dispersions. $Na_2CO_3$ solution was added together with the monomer emulsion and feeded to control the emulsion pH at around 7.8. Temperature was increased to 75°C to initiate the polymerization reaction for a period of two hours. Afterwards the temperature was lowered to 58°C for residual monomer chasing process. 0.10g t-BHPwas added into above emulsion. After that a solution of 0.10g SFSin 3 mL DI water was fed into the emulsion over 5 minutes. The system was cooled to room temperature after reaction period of 50 minutes. PUA emulsion was obtained by filtering through 100 mesh (0.15 mm) filtering cloth.

Example 3:

An aqueous dispersion was prepared as following process as depicted in the following Table: A mixture of 200g PCL2K and 0.1g DBTDL catalyst were added into a 1L three-necked flask under stirring. The flask was then heated to 125°C while purging the system with $N_2$ for 15min. 80g IPDI was added into the flask slowly and the reaction was kept for 1 hour after cooling the system to 75 °C. 16.5 g DMPA was added afterwards for another 2h reaction period at the same temperature. Mixture of 40g MMA and 12.3g TEA were added into the flask after cooling the temperature to 65°C under stirring for 10 minutes.

The above prepolymer was poured slowly into 680 g DI water in another container under vigorous stirring for 10 minutes. 9.6 g PDA was added dropwise into above emulsion under stirring for additional 10 minutes. Above emulsion was filtered with 100-mesh filter cloth to get the PU pre-polymer dispersion.

The emulsion dispersion was transferred into another flask which was equipped with a condenser, a mechanical stirrer and inlet for $N_2$. Solution of KPSin DI water as initiator was poured into the flask. 1.5% PEM, together with MMA and BA (mole ratio= 2/3) monomers, was fed into above dispersions. $Na_2CO_3$ solution was feeded together with monomer emulsion to control the emulsion pH at around 7.5. Temperature was increased to 80°C to initiate the polymerization reaction for a period of two hours. Afterwards the temperature was lowered to 58 °C for residual monomer chasing process. 0.10g t-BHPwas added into above emulsion. After that a solution of 0.10g SFSin 3mL DI water was fed into the emulsion over 5 minutes. The system was cooled to room temperature after reaction period of 50 minutes. PUA emulsion was obtained by filtering through 100 mesh (0.15 mm) filtering cloth.

|  |  | Ingredients | C.Ex.1 | C.Ex.2 | Example2 | Example3 |
|---|---|---|---|---|---|---|
| Grind |  |  |  |  |  |  |
| A. |  | Water | 94.20 | 94.20 | 94.20 | 94.20 |
|  |  | Tamol 850 | 1.96 | 1.96 | 1.96 | 1.96 |
|  |  | KTPP | 0.57 | 0.57 | 0.57 | 0.57 |
|  |  | Nopco NXZ | 0.95 | 0.95 | 0.95 | 0.95 |
| B. |  | $CaCO_3$ CC700 | 171.92 | 171.92 | 171.92 | 171.92 |
|  |  | $TiO_2$ Ti-pu re R-902 | 28.67 | 28.67 | 28.67 | 28.67 |
|  |  | ZnO | 19.10 | 19.095 | 19.10 | 19.10 |
|  |  |  |  |  |  |  |
| Letdown |  |  |  |  |  |  |
| C. |  | Latex | 266.33 | 395.85 | 385.48 | 357.27 |
|  |  | Nopco NXZ | 0.95 | 0.95 | 0.95 | 0.95 |
|  |  | Texanol | 3.97 | 3.97 | 3.97 | 3.97 |
|  |  | Skane M-8 | 1.05 | 1.05 | 1.05 | 1.05 |
|  |  | Ammonia | 0.5 | 0.5 | 0.5 | 0.50 |
|  |  | Propylene Glycol | 12.2 | 12.2 | 12.2 | 12.20 |
|  |  | N astrosol 250 HBR | 2.1 | 2.1 | 2.1 | 2.10 |

Thewater swelling performance results of Example 2 and Example 3, compared with C.Ex.1 and C.Ex.2, were listed in Table 8 below. Example 2 and 3 outperformed C.Ex.1 and C.Ex.2 with lower water swelling ratio means better water resistance.

Table 8 Water Swelling

|  | Water Swelling Ratio/ % |
|---|---|
| C.Ex.1 | 16.80 |
| C.Ex.2 | 7.93 |
| Example2 | 5.24 |
| Example3 | 6.09 |

The tensile strength and elongation rate results were summarized in Table9. Example 2 and 3 have more balanced tensile strength and elongation rate performance compared with comparative examples 1 and 2.

Table 9 Tensile/ Elongation performance of pigmented coating films

|  | Tensile Strength/ MPa | Elongation Rate/ % |
|---|---|---|
| C.Ex.1 | 1.0 | 397.6 |
| C.Ex.2 | 3.1 | 230.6 |
| Example2 | 5.2 | 268.1 |
| Example3 | 3.9 | 259.4 |

The dirt pickup resistance was shown in Table 10 where Example 2 and 3 has much better dirt resistance than C.Ex.1 and comparable with C.Ex.2 within national standard requirement (<20%).

Table 10 Dirt Pickup Resistance

|  | Loss of Reflectance/ % |
|---|---|
| C.Ex.1 | 32.5 |
| C.Ex.2 | 11.4 |
| Example 2 | 12.2 |
| Example 3 | 14.3 |

## Claims

1.  A process for making polyurethane/acrylic hybrid dispersions comprising the following continuous steps:

    i) adding at least one polyol into a reactor;
    ii) adding DMPA simultaneously with/after step i), as water dispersibility enhancing agent at a temperature of from 115°C to 140°C to obtain a homogeneous solution;
    iii) adding at least one polyisocyanate at a temperature of from 75°C to 95°C until the NCO content reaches a constant value to prepare the polyurethane prepolymer;
    iv) adding at least one acrylate monomer(s), at least one styrenic monomer(s), or the mixture thereof, as diluent to the polyurethane prepolymer, at a temperature of from 40°C to 65°C;
    v) adding a neutralizing agent;
    vi) dispersing and extending the polyurethane prepolymer in water in the presence of the acrylate monomer, and/or the styrenic monomer of step iv); and
    vii) feeding the emulsified mixture of at least one ethylenically unsaturated nonionic monomer(s), and based on the total weight of the ethylenically unsaturated nonionic monomer(s) including the acrylate monomer, and/or the styrenic monomer of step iv), from 1 wt.% to 3 wt.% acid monomer(s) and co-polymerizing them together, at a pH value from 7.2 to 8.6 in the presence of a buffer reagent, to get the polyurethane/acrylate hybrid dispersion.

2.  The process for making polyurethane/acrylic hybrid dispersions according to claim 1 further comprising cold-blending the polyurethane/acrylic hybrid dispersions with a polyacrylate dispersion under agitation.

3.  The process for making polyurethane/acrylic hybrid dispersions according to claim 2, further comprising modifying the polyurethane/acrylic hybrid dispersion and the polyacrylate dispersion by copolymerization with diacetone acrylamide or acetoacetoxyethyl methacrylate; and adding adipic acid dihydrazide, as a crosslinker.

4.  The process for making polyurethane/acrylic hybrid dispersions according to claim 1 wherein the acrylate monomer is selected from the group consisting of methyl (meth)acrylate, ethyl acrylate, butyl acrylate, hexyl acrylate, 2-ethylhexyl acrylate, hydroxyethyl (meth)acrylate, hydroxypropyl (meth)acrylate and glycidyl methacrylate, and combinations thereof.

5.  The process for making polyurethane/acrylic hybrid dispersions according to claim 1 wherein the polyisocyanate is a diisocyanate.

6. The process for preparing polyurethane/acrylic hybrid dispersions according to claim 5 wherein the diisocyanate is selected from bis(isocyanatomethyl)cyclohexane, hexamethylene diisocyanate, isophorone diisocyanate, and the combination thereof.

7. The process for preparing polyurethane/acrylic hybrid dispersions according to claim 1 wherein the polyol is selected from polyether diols, polyester diols or multi-functional polyols.

8. The process for making polyurethane/acrylic hybrid dispersions according to claim 1 wherein the acid monomer(s) is selected from the group consisting of (methyl)acrylic acid, phosphoethyl methacrylate, 2-acrylamido-2-methyl propane sulfonic acid, and the mixture thereof.

9. The process for making polyurethane/acrylic hybrid dispersions according to claim 1 wherein the buffer reagent is selected from the group consisting of $NaHCO_3$, sodium bitartrate, and the mixture thereof.

10. A high pigment volume concentrate (PVC) coating composition comprising a polyurethane/acrylic hybrid dispersion comprising a polyurethane prepolymer, and an acrylic polymer comprising in polymerized form, ethylenically unsaturated nonionic monomer(s), and from 1 wt.% to 3 wt.%, based on the total weight of ethylenically unsaturated nonionic monomer(s), of an acid monomer(s) and one or more pigments and/or fillers having a PVC of 30 to 55.

11. The polyurethane/acrylic hybrid dispersion according to claim 10 wherein the acid monomer(s) is selected from the group consisting of (methyl)acrylic acid, phosphoethyl methacrylate, 2-acrylamido-2-methyl propane sulfonic acid, and the mixture thereof.

**Patentansprüche**

1. Ein Verfahren zum Herstellen von Polyurethan-/Acrylhybriddispersionen, das die folgenden kontinuierlichen Schritte beinhaltet:

    i) Zugeben mindestens eines Polyols in einen Reaktor;
    ii) Zugeben von DMPA simultan mit/nach Schritt i) als Mittel zur Verbesserung der Wasserdispergierbarkeit bei einer Temperatur von 115 °C bis 140 °C, um eine homogene Lösung zu erhalten;
    iii) Zugeben mindestens eines Polyisocyanats bei einer Temperatur von 75 °C bis 95 °C, bis der NCO-Gehalt einen konstanten Wert erreicht, um das Polyurethanpräpolymer zuzubereiten;
    iv) Zugeben mindestens eines Acrylatmonomers, mindestens eines Styrolmonomers oder der Mischung davon als Verdünnungsmittel zu dem Polyurethanpräpolymer bei einer Temperatur von 40 °C bis 65 °C;
    v) Zugeben eines Neutralisationsmittels;
    vi) Dispergieren und Strecken des Polyurethanpräpolymers in Wasser in Gegenwart des Acrylatmonomers und/oder des Styrolmonomers von Schritt iv); und
    vii) Zuführen der emulgierten Mischung von mindestens einem ethylenisch ungesättigten nichtionischen Monomer und, bezogen auf das Gesamtgewicht des ethylenisch ungesättigten nichtionischen Monomers, das das Acrylatmonomer und/oder das Styrolmonomer von Schritt iv) umfasst, von zu 1 Gew.-% bis 3 Gew.-% Säuremonomer(en) und Copolymerisieren dieser zusammen bei einem pH-Wert von 7,2 bis 8,6 in der Gegenwart eines Pufferreagens, um die Polyurethan-/Acrylathybriddispersion zu erlangen.

2. Verfahren zum Herstellen von Polyurethan-/Acrylhybriddispersionen gemäß Anspruch 1, das ferner das Kaltvermischen der Polyurethan-/Acrylhybriddispersionen mit einer Polyacrylatdispersion unter Rühren beinhaltet.

3. Verfahren zum Herstellen von Polyurethan-/Acrylhybriddispersionen gemäß Anspruch 2, das ferner das Modifizieren der Polyurethan-/Acrylhybriddispersion und der Polyacrylatdispersion durch Copolymerisation mit Diacetonacrylamid oder Acetoacetoxyethylmethacrylat; und das Zugeben von Adipinsäuredihydrazid als ein Vernetzer beinhaltet.

4. Verfahren zum Herstellen von Polyurethan-/Acrylhybriddispersionen gemäß Anspruch 1, wobei das Acrylatmonomer aus der Gruppe ausgewählt ist, die aus Methyl(meth)acrylat, Ethylacrylat, Butylacrylat, Hexylacrylat, 2-Ethylhexylacrylat, Hydroxyethyl(meth)acrylat, Hydroxypropyl(meth)acrylat und Glycidylmethacrylat und Kombinationen davon besteht.

5. Verfahren zum Herstellen von Polyurethan-/Acrylhybriddispersionen gemäß Anspruch 1, wobei das Polyisocyanat ein Diisocyanat ist.

6. Verfahren zum Zubereiten von Polyurethan-/Acrylhybriddispersionen gemäß Anspruch 5, wobei das Diisocyanat aus Bis(isocyanatomethyl)cyclohexan, Hexamethylendiisocyanat, Isophorondiisocyanat und der Kombination davon ausgewählt ist.

7. Verfahren zum Zubereiten von Polyurethan-/Acrylhybriddispersionen gemäß Anspruch 1, wobei das Polyol aus Polyetherdiolen, Polyesterdiolen oder multifunktionellen Polyolen ausgewählt ist.

8. Verfahren zum Herstellen von Polyurethan-/Acrylhybriddispersionen gemäß Anspruch 1, wobei das/die Säuremonomer(e) aus der Gruppe ausgewählt ist/sind, die aus (Methyl)acrylsäure, Phosphoethylmethacrylat, 2-Acrylamido-2-methylpropansulfonsäure und der Mischung davon besteht.

9. Verfahren zum Herstellen von Polyurethan-/Acrylhybriddispersionen gemäß Anspruch 1, wobei das Pufferreagens aus der Gruppe ausgewählt ist, die aus $NaHCO_3$, Natriumbitartrat und der Mischung davon besteht.

10. Eine Beschichtungszusammensetzung mit hoher Pigmentvolumenkonzentration (PVK), die Folgendes beinhaltet: eine Polyurethan-/Acrylhybriddispersion, die ein Polyurethanpräpolymer und ein Acrylpolymer beinhaltet, das in polymerisierter Form ethylenisch ungesättigte nichtionische Monomere und, bezogen auf das Gesamtgewicht der ethylenisch ungesättigten nichtionischen Monomere, zu 1 Gew.-% bis 3 Gew.-% Säuremonomer(e) beinhaltet, und ein oder mehrere Pigmente und/oder Füllstoffe, die eine PVK von 30 bis 55 aufweisen.

11. Polyurethan-/Acrylhybriddispersion gemäß Anspruch 10, wobei das/die Säuremonomer(e) aus der Gruppe ausgewählt sind, die aus (Methyl)acrylsäure, Phosphoethylmethacrylat, 2-Acrylamido-2-methylpropansulfonsäure und der Mischung davon besteht.


**Revendications**

1. Un procédé pour la réalisation de dispersions hybrides polyuréthane/acrylique comprenant les étapes continues suivantes :

   i) l'ajout d'au moins un polyol dans un réacteur ;
   ii) l'ajout de DMPA simultanément à/après l'étape i), en tant qu'agent améliorant la dispersibilité dans l'eau à une température allant de 115 °C à 140 °C afin d'obtenir une solution homogène ;
   iii) l'ajout d'au moins un polyisocyanate à une température allant de 75 °C à 95 °C jusqu'à ce que la teneur en NCO atteigne une valeur constante afin de préparer le prépolymère de polyuréthane ;
   iv) l'ajout d'au moins un monomère acrylate, d'au moins un monomère styrénique, ou du mélange de ceux-ci, en tant que diluant au prépolymère de polyuréthane, à une température allant de 40 °C à 65 °C ;
   v) l'ajout d'un agent neutralisant ;
   vi) la dispersion et l'extension du prépolymère de polyuréthane dans de l'eau en présence du monomère acrylate, et/ou du monomère styrénique de l'étape iv) ; et
   vii) l'apport du mélange émulsionné d'au moins un monomère non ionique éthyléniquement insaturé, et rapporté au poids total du ou des monomères non ioniques éthyléniquement insaturés incluant le monomère acrylate, et/ou le monomère styrénique de l'étape iv), de 1 % en poids à 3 % en poids d'un ou de plusieurs monomères d'acide, et la copolymérisation de ceux-ci ensemble, à une valeur de pH allant de 7,2 à 8,6 en présence d'un réactif tampon, afin d'avoir la dispersion hybride polyuréthane/acrylate.

2. Le procédé pour la réalisation de dispersions hybrides polyuréthane/acrylique selon la revendication 1 comprenant en outre le mélange homogène à froid des dispersions hybrides polyuréthane/acrylique avec une dispersion de polyacrylate sous agitation.

3. Le procédé pour la réalisation de dispersions hybrides polyuréthane/acrylique selon la revendication 2, comprenant en outre la modification de la dispersion hybride polyuréthane/acrylique et de la dispersion de polyacrylate par copolymérisation avec du diacétone acrylamide ou du méthacrylate d'acétoacétoxyéthyle ; et l'ajout de dihydrazide d'acide adipique, en tant qu'agent de réticulation.

4. Le procédé pour la réalisation de dispersions hybrides polyuréthane/acrylique selon la revendication 1 dans lequel le monomère acrylate est sélectionné dans le groupe constitué du (méth)acrylate de méthyle, de l'acrylate d'éthyle, de l'acrylate de butyle, de l'acrylate d'hexyle, de l'acrylate de 2-éthylhexyle, du (méth)acrylate d'hydroxyéthyle, du (méth)acrylate d'hydroxypropyle et du méthacrylate de glycidyle, et de combinaisons de ceux-ci.

5. Le procédé pour la réalisation de dispersions hybrides polyuréthane/acrylique selon la revendication 1 dans lequel le polyisocyanate est un diisocyanate.

6. Le procédé pour la préparation de dispersions hybrides polyuréthane/acrylique selon la revendication 5 dans lequel le diisocyanate est sélectionné parmi le cyclohexane de bis(isocyanatométhyle), le diisocyanate d'hexaméthylène, le diisocyanate d'isophorone, et la combinaison de ceux-ci.

7. Le procédé pour la préparation de dispersions hybrides polyuréthane/acrylique selon la revendication 1 dans lequel le polyol est sélectionné parmi des polyéther diols, des polyester diols ou des polyols multifonctionnels.

8. Le procédé pour la réalisation de dispersions hybrides polyuréthane/acrylique selon la revendication 1 dans lequel le ou les monomères d'acide sont sélectionnés dans le groupe constitué de l'acide (méthyl)acrylique, du méthacrylate de phosphoéthyle, de l'acide 2-acrylamido-2-méthylpropane sulfonique, et du mélange de ceux-ci.

9. Le procédé pour la réalisation de dispersions hybrides polyuréthane/acrylique selon la revendication 1 dans lequel le réactif tampon est sélectionné dans le groupe constitué de NaHCO$_3$, du bitartrate de sodium, et du mélange de ceux-ci.

10. Une composition de revêtement à concentration pigmentaire volumique (CPV) élevée comprenant une dispersion hybride polyuréthane/acrylique comprenant un prépolymère de polyuréthane, et un polymère acrylique comprenant sous forme polymérisée, un ou des monomères non ioniques éthyléniquement insaturés, et de 1 % en poids à 3 % en poids, rapporté au poids total du ou des monomères non ioniques éthyléniquement insaturés, d'un ou de plusieurs monomères d'acide et un ou plusieurs pigments et/ou charges ayant une CPV de 30 à 55.

11. La dispersion hybride polyuréthane/acrylique selon la revendication 10 dans laquelle le ou les monomères d'acide sont sélectionnés dans le groupe constitué de l'acide (méthyl)acrylique, du méthacrylate de phosphoéthyle, de l'acide 2-acrylamido-2-méthylpropane sulfonique, et du mélange de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 97552011 T
- GB 66822008 T